# EUROPEAN PATENT APPLICATION

(11) **EP 3 660 584 A1**
(43) Date of publication of application: **03.06.2020**
(21) Application number: 18785800.6
(22) Date of filing: 26.01.2018
(51) Int. Cl.: G02F 1/1343

(54) **ARRAY SUBSTRATE, DISPLAY DEVICE AND DRIVING METHOD THEREFOR**

(30) Priority: 24.07.2017 CN 201710607921
(71) Applicant: BOE Technology Group Co., Ltd., Beijing 100015 (CN); Hefei BOE Optoelectronics Technology Co., Ltd., Hefei, Anhui 230012 (CN)
(72) Inventor: GUO, Yuanhui, Beijing 100176 (CN)
(74) Representative: Potter Clarkson
(86) International application number: PCT/CN2018/074358
(87) International publication number: WO 2019/019583

(57) **Abstract**

The present disclosure provides an array substrate, a display device, and a driving method thereof, and relates to the field of display technology. The array substrate includes a plurality of pixel regions arranged in an array, which include a first pixel region and a second pixel region alternatively disposed in a row direction; wherein a pixel electrode of the first pixel region is disposed away from the center of the first pixel region in a first direction relative to the center of the first pixel region; a pixel electrode of the second pixel region is disposed away from the center of the second pixel region in a second direction relative to the center of the second pixel region; wherein the first direction and the second direction are away from each other and are both extending in the row direction.

## Description

### CROSS-REFERENCE TO RELATED APPLICATIONS

This application claims priority to Chinese Patent Application No. 201710607921.8 filed July 24, 2017, entitled "ARRAY SUBSTRATE, DISPLAY DEVICE AND DRIVING METHOD THEREOF", the entire contents of which are incorporated herein by reference.

### TECHNICAL FIELD

The present disclosure relates to an array substrate, a display device, and a driving method thereof.

### BACKGROUND

In the field of display technology, liquid crystal displays (LCDs) are widely used in modern digital information devices because of their advantages such as thinness, low power consumption, no radiation, and high resolution.

As resolution of display products becomes higher and higher, pixel size gets smaller and smaller, so does aperture ratio. Normally, designers will increase the aperture ratio by reducing a width of a Black Matrix (BM for short), but the reduction of the width of the Black Matrix causes the production of poor cross color. Moreover, as color gamut of the product is increasing, a thickness of a color film gets thicker and thicker, which makes a distance between a light source and the Black Matrix farther and farther, thereby further increasing the risk of cross color.

It should be noted that the foregoing information disclosed in Background are only for the purpose of enhancement of the understanding of the background of the present disclosure and therefore the information can include information that does not constitute the prior art already known to those of ordinary skill in the art.

### SUMMARY

An object of the present disclosure is to provide an array substrate, a display device, and a driving method thereof.

According to an aspect of the present disclosure, there is provided an array substrate, including a plurality of pixel regions arranged in an array, which include a first pixel region and a second pixel region alternatively disposed in a row direction; wherein
a pixel electrode of the first pixel region is disposed away from the center of the first pixel region in a first direction relative to the center of the first pixel region;
a pixel electrode of the second pixel region is disposed away from the center of the second pixel region in a second direction relative to the center of the second pixel region;
wherein the first direction and the second direction are away from each other and are both extending in the row direction.

In an exemplary embodiment of the present disclosure, the method further includes data lines disposed in a column direction between the plurality of pixel regions, wherein a ratio between a larger distance and a smaller distance between an orthographic projection of the pixel electrode of any of the pixel regions on the array substrate and orthographic projections of the adjacent data lines on both sides of the pixel electrode on the array substrate is greater than or equal to 1.5 and less than or equal to 2.5.

In an exemplary embodiment of the present disclosure, a width of the pixel electrode of the first pixel region is equal to a width of the pixel electrode of the second pixel region;

for the plurality of pixel regions in the same row, a distance between the orthographic projection of the pixel electrode of the first pixel region on the array substrate and the orthographic projections of the data lines on the array substrate is equal to a distance between the orthographic projection of the pixel electrode of the second pixel region on the array substrate and the orthographic projections of the data lines on the array substrate.

In an exemplary embodiment of the present disclosure, the pixel regions in the same column include only one of the first pixel region and the second pixel region; or the pixel regions in the same column include the first pixel region and the second pixel region.

According to an aspect of the present disclosure, there is provided a display device including the above-described array substrate and an opposite substrate;
a sensor configured to acquire specific features of a user;
a control circuit configured to determine a relative position between the user and the display device according to the specific features of the user, and control an operating state of the first pixel region and the second pixel region according to the relative position between the user and the display device.

In an exemplary embodiment of the present disclosure, the display device further includes:
a driving circuit configured to provide a data voltage to the first pixel region and/or the second pixel region through the data lines under the control of the control circuit.

In an exemplary embodiment of the present disclosure, the sensor includes an infrared sensor or an image sensor.

According to an aspect of the present disclosure, there is provided a method for driving a display device, applied to the above-described display device, including:
acquiring specific features of a user;
determining a relative position between the user and the display device according to the specific features of the user, and controlling an operating state of the first pixel region and the second pixel region according to the relative position between the user and the display device.

In an exemplary embodiment of the present disclosure, the method further includes:
providing a data voltage corresponding to the operating state of the first pixel region and the second pixel region to the first pixel region and/or the second pixel region through the data lines.

In an exemplary embodiment of the present disclosure, the providing a data voltage corresponding to the operating state of the first pixel region and the second pixel region to the first pixel region and/or the second pixel region through the data lines includes:
providing a data voltage to the first pixel region or the second pixel region through the data lines, when an included angle between a relative position between the user and the display device and an emission light perpendicular to the display device is greater than a preset angle; and
providing a data voltage to the first pixel region and the second pixel region through the data lines, when an included angle between a relative position between the user and the display device and an emission light perpendicular to the display device is less than or equal to the preset angle.

It shall be understood that the above general description and the following detailed description are intended to be illustrative and explanatory only and not restrictive of the present disclosure.

This section provides an overview of various implementations or examples of the techniques described in present disclosure, and rather than a full disclosure of the full scope or all the features of the disclosed techniques.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosures. Obviously, the drawings in the following description are merely some embodiments of the present disclosure, and those skilled in the art can also obtain other drawings based on these drawings without any creative work.
Fig. 1 is a schematic diagram schematically illustrating principles of a cross color phenomenon of an LCD;
Fig. 2 is a cross-sectional view schematically showing an array substrate in an exemplary embodiment of the present disclosure;
Fig. 3 is a diagram schematically illustrating viewing effect from a left-view angle in an exemplary embodiment of the present disclosure;
Fig. 4 is a diagram schematically illustrating viewing effect from a right-view angle in an exemplary embodiment of the present disclosure;
Fig. 5 is a diagram schematically illustrating viewing effect from a front-view angle in an exemplary embodiment of the present disclosure;
Fig. 6 is a first schematic diagram schematically illustrating an arrangement manner of pixel regions in an exemplary embodiment of the present disclosure;
Fig. 7 is a second schematic diagram schematically illustrating an arrangement manner of pixel regions in an exemplary embodiment of the present disclosure;
Fig. 8 is a structural diagram schematically illustrating a plane of an array substrate in an exemplary embodiment of the present disclosure; and
Fig. 9 is a flow chart schematically showing a driving method of a display device in an exemplary embodiment of the present disclosure.

### Reference signs:

20-array substrate; 20a-first pixel region; 20b-second pixel region; 201-pixel electrode; 202-common electrode; 203-data line; 203a-first data line; 600-pixel regions in one column; 700-pixel region in one row.

### DETAILED DESCRIPTION

Exemplary embodiments will now be described more comprehensively with reference to the accompanying drawings. However, exemplary embodiments can be implemented in various forms and should not be construed as being limited to the examples set forth herein; rather, these embodiments are provided so that the present disclosure will be described more comprehensively and entirely, and will fully convey the concept of the exemplary embodiments to those skilled in the art. The described features, structures, or characteristics may be combined in one or more embodiments in any suitable manner.

Furthermore, the drawings are merely schematically illustrative of the present disclosure and are not necessarily drawn to scale. The same reference numerals in the drawings denote the same or similar parts, and the repeated description thereof will be omitted. Some of the block diagrams shown in the drawings are functional entities and are not necessarily corresponding to physically or logically separate entities. These functional entities may be implemented in software, or implemented in one or more hardware modules or integrated circuits, or implemented in different network and/or processor devices and/or microcontroller devices.

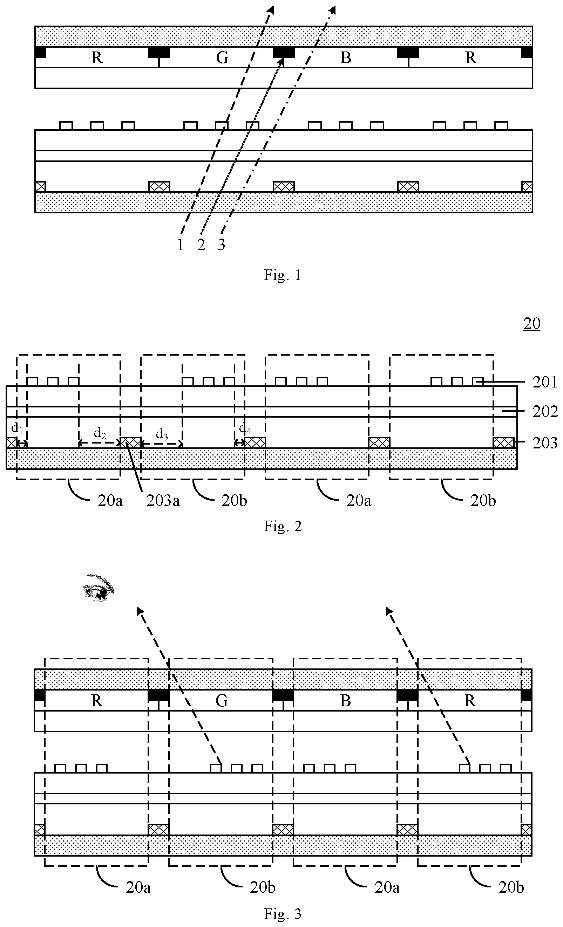

Fig. 1 is a diagram illustrating principles of a cross color phenomenon of an LCD. When pure color display is performed, if a viewer views the display from a side-view angle, light can be classified as follows:
Light 1: light, which is normally displayed and is emitted corresponding to a pixel of its own;
Light 2: light, which is absorbed by BM, and pure in color but absorbed by the BM;
Light 3: light, crosstalk of which affects other pixel emissions.

Among the above-described three types of light, only light 1 is required for normal display, light 2 causes decreasing transmittance of a display panel, and light 3 results in a color shift phenomenon of the display panel. For this pixel design, as a viewing angle increases, the amount of the light 1 reduces, and the amount of the light 3 increases, therefore, there will be a serious cross color phenomenon when a viewer views the display from a large view angle. It can be seen that the traditional pixel design affects a color sense of the side-view angle of the LCD, thus its display quality needs to be improved.

An embodiment of this example provides an array substrate 20. As shown in Fig. 2, the array substrate 20 includes a plurality of pixel regions arranged in an array, which include first pixel regions 20a and second pixel regions 20b alternately disposed in a row direction.

In this embodiment, pixel electrodes 201 of the first pixel regions 20a and the second pixel regions 20b are described as being disposed close to the left and right sides of the array substrate. However, those skilled in the art shall understand that there might not be such a clear concept as side for a display device having an abnormal shape, therefore, positional relationships of the pixel electrodes in this embodiment may also be expressed, for example, as follows: the pixel electrodes 201 of the first pixel regions 20a are disposed away from the center of the first pixel regions 20a in a first direction relative to the center of the first pixel regions 20a; and the pixel electrodes 201 of the second pixel regions 20b are disposed away from the center of the second pixel regions 20b in a second direction relative to the center of the second pixel regions 20b; wherein the first direction and the second direction are away from each other and are both extending in the row direction.

The pixel electrodes 201 of the first pixel regions 20a are disposed close to a first side (for example, the left side) of the array substrate 20 relative to the center of the first pixel regions 20a; and the pixel electrodes 201 of the second pixel regions 20b are disposed close to a second side (for example, the right side) of the array substrate 20 relative to the center of the second pixel regions 20b; wherein the first side and the second side are opposite sides of the array substrate 20 extending in a column direction.

The array substrate 20 may further include a common electrode 202, wherein an electric field for driving liquid crystal molecules to be deflected may be generated between the common electrode 202 and the pixel electrode 201, and the common electrode 202 may be a plate-shaped electrode, which may be specifically disposed above or under the pixel electrode 201, and the common electrode 202 and the pixel electrode 201 may be separated by an insulating layer disposed therebetween.

The array substrate 20 may further include data lines 203 extending in the column direction and the pixel regions in each column are electrically connected to a corresponding data line 203. Each of the pixel regions is provided with a thin film transistor electrically connected to the pixel electrode 201, the thin film transistor may receive a data voltage supplied from the corresponding data line 203 and apply the data voltage to the pixel electrode 201, and the common electrode 202 may receive a common voltage supplied by a common electrode line. In this way, a magnitude of the electric field of the various pixel regions may be determined by a voltage difference between the pixel electrode 201 and the common electrode 202, and the common voltage is usually set as a constant value, therefore, the magnitude of the electric field may be further determined by the data voltage applied to the pixel electrode 201.

In the array substrate 20 provided by the exemplary embodiment of the present disclosure, the first pixel regions 20a, in which the pixel electrodes 201 are closer to the first side of the array substrate 20, and the second pixel regions 20b, in which the pixel electrodes 201 are closer to the second side of the array substrate 20, are disposed, such that the corresponding pixel regions can be driven for display according to a viewing angle of a user, to avoid the occurance of a cross color phenomenon when the user views the display from a side-view angle, thereby improving the color shift phenomenon of the display viewed from the side-view angle and increasing the display quality of the display viewed from the side-view angle. For example, for an application scenario such as an in-vehicle display, the user is usually located on the side of the display device, therefore, since the pixel regions can be adjusted according to the viewing angle of the user, the color shift phenomenon of the display device can be effectively improved, thereby effectively improving the display quality. In addition, it should be understood that the present disclosure is not limited thereto, and the array substrate of the present disclosure may also be applied to a dual-view display, for example, thereby the driving of the pixel regions is adjusted for multiple users at different view angles, and display effects are optimized for the different users, or different display contents are provided to the different users.

When the user is viewing from the first side (for example, a left-view angle) of the array substrate 20, as shown in Fig. 3, the second pixel regions 20b may be controlled to turn on while the adjacent first pixel regions 20a are controlled to be turned off, or both of them are turned on at the same time, but the second pixel regions 20b are mainly used for display, at this time, the user can receive more light emitted from the second pixel regions 20b, so that the probability of cross color occurring when the light emitted from the second pixel regions 20b is passing through the first pixel regions is significantly decreased, thus color shift is effectively prevented and the display quality when viewing from the left-view angle is ensured.

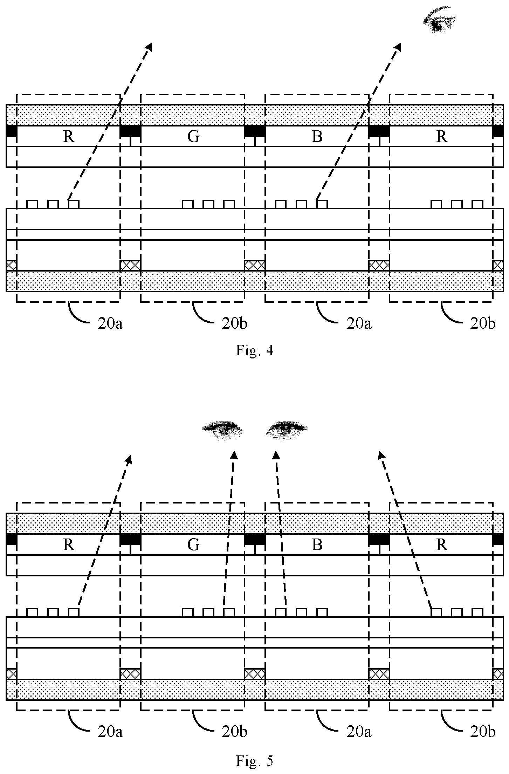

When the user is viewing from the second side (for example, a right-view angle) of the array substrate 20, as shown in Fig. 4, the first pixel regions 20a may be controlled to turn on while the adjacent second pixel regions 20b may be controlled to turn off, or both of them are controlled to turn on at the same time, but the first pixel regions 20a are mainly used for display, at this time, the user can receive more light emitted from the first pixel regions 20a, so that the probability of cross color occurring when the light emitted from the first pixel regions 20a is passing through the second pixel regions is significantly decreased, thus the color shift is effectively prevented and the display quality when viewing from the right-view angle is ensured.

When the user is viewing in a central region of the array substrate 20 (i.e. a front-view angle), as shown in Fig. 5, the first pixel regions 20a and the second pixel regions 20b may be controlled to turn on at the same time and function together, which, at this time, is the same as a conventional display mode.

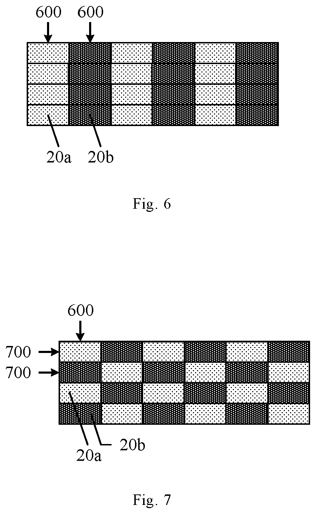

In an embodiment of this example, pixel regions 600 in each column may include only the first pixel regions 20a or the second pixel regions 20b, for example, the pixel regions 600 in a column shown in Fig. 6 include only the first pixel regions 20a, and the pixel regions 600 in another adjacent column include only the second pixel regions 20b.

In another embodiment of this example, the pixel regions 600 in each column may also include the first pixel regions 20a and the second pixel regions 20b at the same time, for example, as for the pixel regions 600 in an identical column as shown in Fig. 7, a pixel region 700 in one row is provided as the first pixel region 20a, and a pixel region 700 in another adjacent row is provided as the second pixel region 20b.

It should be noted that, in this embodiment, it is only required that the first pixel regions 20a and the second pixel regions 20b in each row of the pixel regions are alternately arranged, and the specific arrangement order in different rows of pixel regions is not compulsorily limited.

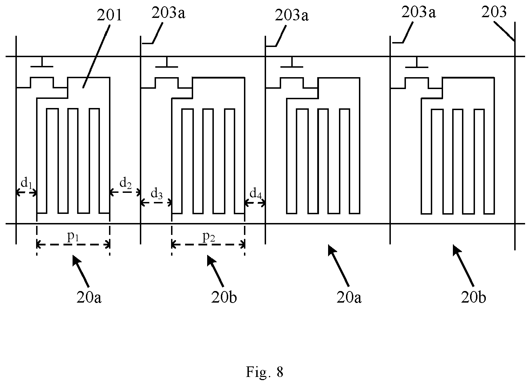

In an embodiment of this example, referring to Figs. 2 and 8, the pixel electrodes 201 are a comb-tooth structure, and the pixel electrodes 201 of the first pixel regions 20a may have the same width as that of the pixel electrodes 201 of the second pixel regions 20b. For the plurality of pixel regions in the same row, the data line 203 between the adjacent first pixel region 20a and second pixel region 20b is a first data line 203a, and a distance between the pixel electrode 201 of the first pixel region 20a and the first data line 203a is equal to a distance between the pixel electrode 201 of the second pixel region 20b and the first data line 203a. A design manner of the pixel regions facilitates unification of preparation processes.

It should be understood that in the present disclosure, the "distance" between the pixel electrode and the data line is intended to express a distance between a projection (such as an orthographic projection) of the pixel electrode on the substrate (e.g. the array substrate) and a projection (such as an orthographic projection) of the data line on the substrate. In the following, a similar "distance" means a similar distance between the orthographic projections unless otherwise stated.

It should be understood that although the present embodiment is described by taking an example in which the pixel electrodes are the comb-tooth structure, the pixel electrodes may also be a block-shaped structure.

In order to obtain a higher saturation of the side-view angle, in the present embodiment, a ratio between a larger distance and a smaller distance, which are between the pixel electrode 201 and the adjacent data lines 203 on both sides in any of the pixel regions is at least equal to or greater than 1.5. That is to say, the ratio of the distance from the pixel electrode 201 of the first pixel region 20a to the data line 203 on the second side (for example, the right side) to the distance from the pixel electrode 201 of the first pixel region 20a to the data line 203 on the first side (for example, the left side) is preferably as large as possible. Similarly, the ratio of the distance from the pixel electrode 201 of the second pixel region 20b to the data line 203 on the first side (for example, the left side) to the distance from the pixel electrode 201 of the second pixel region 20b to the data line 203 on the second side (for example, the right side) is preferably as large as possible.

In an embodiment of the present disclosure, the present embodiment may be embodied in such a manner that the ratio between a larger distance and a smaller distance, which are between the pixel electrode 201 in any of the pixel regions and the adjacent data lines 203 on both sides is at least equal to or less than 2.5. When the above ratio is too large (for example, when it exceeds 2.5), it may affect the front-view angle, that is, the cross color phenomenon might occur in the range of the front-view angle. Therefore, in the case where it is required to ensure the display effect of the front-view angle, the ratio can be set to be equal to or less than 2.5.

Manners for providing the above-described pixel regions will be more intuitively described below with reference to Fig. 8. Relevant design parameters of the pixel regions are as follows.

The distance between the pixel electrode 201 of the first pixel region 20a and the data line 203 on the first side (for example, the left side) of the first pixel region 20a is set as d1, and the distance between the pixel electrode 201 of the first pixel region 20a and the data line 203 on the second side (for example, the right side) of the first pixel region 20a is set as d2, and d1<d2.

The distance between the pixel electrode 201 of the second pixel region 20b and the data line 203 on the first side (for example, the left side) of the second pixel region 20b is set as d3, and the distance between the pixel electrode 201 of the second pixel region 20b and the data line 203 on the second side (for example, the right side) of the second pixel region 20b is set as d4, and d3>d4.

The distance d1 between the pixel electrode 201 of the first pixel region 20a and the data line 203 on the first side (for example, the left side) of the first pixel region 20a is equal to the distance d4 between the pixel electrode 201 of the second pixel region 20b and the data line 203 on the second side (for example, the right side) of the second pixel region 20b, i.e., d1 = d4.

The distance d2 between the pixel electrode 201 of the first pixel region 20a and the data line 203 on the second side (for example, the right side) of the first pixel region 20a is equal to the distance d3 between the pixel electrode 201 of the second pixel region 20b and the data line 203 on the first side (for example, the left side) of the second pixel region 20b, i.e., d2 = d3.

A width p1 of the pixel electrode 201 of the first pixel region 20a is equal to a width p2 of the pixel electrode 201 of the second pixel region 20b, and d1+d2+p1 is equal to a difference between a lateral length of the first pixel region and a line width of a source/drain metal line (i.e. the data line), and d3+d4+p2 is equal to a difference between a lateral length of the second pixel region and a line width of the source-drain metal line (i.e. the data line).

In this design, the greater the ratio of d2 to d1 (the greater the ratio of d3 to d4), the higher the color saturation of the side-view angle.

The present exemplary embodiment further provides a method for fabricating an array substrate, including: preparing a plurality of pixel regions arranged in an array, which include first pixel regions 20a and second pixel regions 20b arranged alternately in a row direction.

Exemplarily, a preparation process of the array substrate may be as follows: forming a gate metal layer including a gate electrode, a gate line, and a common electrode line above a base substrate; sequentially forming a gate insulating layer and a semiconductor active layer above the gate metal layer; forming a source/drain metal layer including a source electrode, a drain electrode, and a data line above the semiconductor active layer; sequentially forming a planarization layer, a plate-shaped common electrode, an insulating layer, a strip-shaped pixel electrode, and a protective layer above the source/drain metal layer.

The pixel electrode 201 of the first pixel region 20a is fabricated in such a manner that it is disposed close to the first side (e.g. the left side) of the array substrate 20, and the pixel electrode 201 of the second pixel region 20b is fabricated in such a manner that it is disposed close to the second side (e.g. the right side) of the array substrate 20, please see the above-described design parameters for details.

Based on the foregoing descriptions, the corresponding pixel regions can be driven by the array substrate 20 provided by the present exemplary embodiment for display according to the viewing angle of the user, and the viewing angle of the user can be fed back to a display control system by manual selection of the user, for example, by selection through a corresponding function button on a remote controller, or a position of the user can be directly detected by using a sensor, so as to be automatically fed back to the display control system.

Based on the solution in which the position of the user can be automatically fed back, the present exemplary embodiment provides a display device including the above-described array substrate 20, an opposite substrate, and a liquid crystal layer positioned therebetween. Based on this, the display device may further include:
a sensor configured to acquire specific features of a user;
a control circuit configured to determine a relative position between the user and the display device according to the specific features of the user, and control an operating state of the first pixel regions 20a and the second pixel regions 20b according to the relative position between the user and the display device; and
a driving circuit configured to provide a data voltage to the first pixel regions 20a and/or the second pixel regions 20b through the data lines 203 under the control of the control circuit.

In one embodiment, the sensor may be located on a display side of the display device, however, the present disclosure is not limited thereto. Depending on specific configurations of the display device, the sensor may be located at other positions of the display device or may be mechanically separated from the display device.

The control circuit may include a processor which is configured to determine the relative position between the user and the display device according to the specific features of the user, and calculate an operating voltage of the pixel electrodes 201 of the first pixel regions 20a and an operating voltage of the pixel electrodes 201 of the second pixel regions 20b, to control the operating states of the first pixel regions 20a and the second pixel regions 20b.

In this example embodiment, the specific features of the user may be features such as glasses, the user' s eye contours, head contour, and body shape. The sensor may be an infrared sensor or an image sensor. The infrared sensor may include a photon detector or a heat detector configured to acquire a body temperature of the user according to infrared radiations on a surface of a display screen. The image sensor may be an eyeball capturing sensor configured to capture an eyeball position of the user; or the image sensor may also be a camera configured to capture head features of the user, etc.

Specifically, when an included angle between a viewing position of the user and an emission light perpendicular to the display device is greater than a preset angle, the driving circuit may provide a data voltage only to the pixel electrodes 201 of the first pixel regions 20a, or only to the pixel electrodes 201 of the second pixel regions 20b through the data lines 203 under the control of the control circuit. When the included angle between the viewing position of the user and the emission light perpendicular to the display device is less than or equal to the preset angle, the driving circuit may simultaneously supply a data voltage to the pixel electrodes 201 of the first pixel regions 20a and the pixel electrodes 201 of the second pixel regions 20b under the control of the control circuit. The preset angle may be set according to the actual situation of color shift of the side-view angle of the display device, for example, the preset angle may be set as 60°.

It should be noted that when the included angle between the viewing position of the user and the emission light perpendicular to the display device is greater than the preset angle, the driving circuit may also simultaneously provide a data voltage to the pixel electrodes 201 of the first pixel regions 20a and the pixel electrodes 201 of the second pixel regions 20b, but only the first pixel regions 20a or the second pixel regions 20b are mainly used for display.

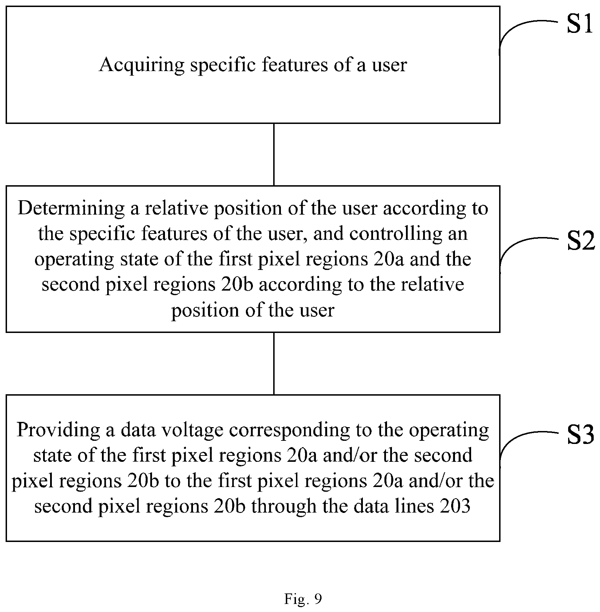

Based on this, as shown in Fig. 9, a method for driving the display device may include:
S1: acquiring specific features of a user;
S2: determining a relative position between the user and the display device according to the specific features of the user, and controlling an operating state of the first pixel regions 20a and the second pixel regions 20b according to the relative position between the user and the display device; and
S3: providing a data voltage corresponding to the operating state of the first pixel regions 20a and the second pixel regions 20a to the first pixel regions 20a and/or the second pixel regions 20b through the data lines 203.

In step S1, the specific features of the user may be acquired by a sensor such as an infrared sensor or an image sensor. In step S2, a processor of a control circuit may be used to analyze and determine position coordinates of the user relative to the display device according to the specific features of the user, and to calculate an operating voltage of the pixel electrodes 201 of the first pixel regions 20a and an operating voltage of the pixel electrodes 201 of the second pixel regions 20b, to control the operating state of the first pixel regions 20a and the second pixel regions 20b. In step S3, a data voltage may be supplied to the first pixel regions 20a and/or the second pixel regions 20b by the driving circuit through the data lines 203.

When it is detected that the included angle between the position of the user and the emission light perpendicular to the display device is greater than a preset angle (for example, 60°), and it is determined that the user is located on a first side of the display device, for example, the user is viewing from the left-view angle, the control circuit may, by signal adjustment, provide a data voltage only to the pixel electrodes 201 of the second pixel regions 20b by the driving circuit through the data line 203, at this time, the second pixel regions 20b are used for display, thereby the problem of color shift of the side-view angle is improved and the display quality of the side-view angle is also improved.

When it is detected that the included angle between the position of the user and the emission light perpendicular to the display device is greater than a preset angle (for example, 60°), and it is determined that the user is located on a second side of the display device, for example, the user is viewing from the right-view angle, the control circuit may, by signal adjustment, enable the driving circuit to provide a data voltage only to the pixel electrodes 201 of the first pixel regions 20a through the data lines 203, at this time, the first pixel regions 20a are used for display, thereby the problem of color shift of the side-view angle is improved and the display quality of the side-view angle is also improved.

When it is detected that the included angle between the position of the user and the emission light perpendicular to the display device is less than or equal to a preset angle, for example, the user is viewing from the front-view angle, the control circuit may, by signal adjustment, enable the driving circuit to simultaneously provide a data voltage to the pixel electrodes 201 of the first pixel regions 20a and the pixel electrodes 201 of the second pixel regions 20b, which is no different from a conventional display mode.

It should be noted that when the user is viewing at a left-view angle position or a right-view angle position, the driving circuit may also provide a data voltage to the pixel electrodes 201 of the first pixel regions 20a and the pixel electrodes 201 of the second pixel regions 20b simultaneously, but the first pixel regions 20a or the second pixel regions 20b are mainly used for display.

The improvement effect of the color shift of the side-view angle of the display device of the present disclosure will be described below by providing several specific product designs by taking a 5-inch high-definition (HD) product (1280*720) as an example.

In a product of the related art, a distance from the pixel electrode of the first pixel region 20a to the pixel electrode of the second pixel region 20b is 12µm, which is the same as a distance from the pixel electrode of the second pixel region 20b to the pixel electrode of the first pixel region 20a; other relevant design parameters are as follows.

A test product 1: a pixel size of 28.75µm, a line width of a data line of 3µm, p1=p2= 0.75µm, d1=d2=d3=d4=7.5µm, d2/d1=1.

In the products of the present disclosure, the plurality of pixel regions include the first pixel regions 20a and the second pixel regions 20b which are alternately disposed in the row direction, thus, in the row direction, the distance from the pixel electrode of the first pixel region 20a to the pixel electrode of the second pixel region 20b is 18µm, and the distance from the pixel electrode of the second pixel region 20b to the pixel electrode of the first pixel region 20a is 12µm; other relevant design parameters are as follows:
A test product 2: a pixel size of 28.75µm, a line width of a data line of 3µm, p1=p2=10.75µm, d1=d4=6µm, d2=d3=9µm, d2/d1=1.5;
A test product 3: a pixel size of 28.75µm, a line width of a data line of 3µm, p1=p2=10.75µm, d1=d4=5µm, d2=d3=10µm, d2/d1=2;
A test product 4: a pixel size of 28.75µm, a line width of a data line of 3µm, p1=p2=10.75 µm, d1=d4=3µm, d2=d3=12µm, d2/d1=4.

A simulation software is used to simulate the color shift phenomenon of the general product and the product of the present disclosure, and a position, an angle of 60° is formed between which and a central normal, is taken as an observation point to compare the left and right color shift phenomena. The simulation results show that:
For the test product 1, that is, the product of the related art, when viewing from a position, an angle of 0° is formed between which and the central normal (the front-view angle), the operating voltage of the pixel electrode of the first pixel region 20a is Vp1=4.2V, the operating voltage of the pixel electrode of the second pixel region 20b is Vp2=4.2V, and red coordinates resulted from the simulation are (0.64, 0.33) CIE1931; and when viewing from a position, an angle of 60° is formed between which and the central normal (the side-view angle), the operating voltage of the pixel electrode of the first pixel region 20a is Vp1=4.2V, the operating voltage of the pixel electrode of the second pixel region 20b is Vp2=4.2V, and red coordinates resulted from the simulation are (0.352, 0.171) CIE1931; therefore, a color shift difference between the front-view angle and the side-view angle is Δuv=0.052; wherein Δuv may represent a difference between color coordinates uv_{front} of the front-view angle and color coordinates uv_{side} of the side-view angle. Usually, human eyes can perceive a color shift difference of 0.001 or more, and when the color shift difference reaches 0.05 or higher, ordinary people can feel obvious color difference.

For the test product 2, that is, the product of the present disclosure, when viewing from a position, an angle of 0° is formed between which and the central normal (the front-view angle), the operating voltage of the pixel electrode of the first pixel region 20a is Vp1=4.2V, the operating voltage of the pixel electrode of the second pixel region 20b is Vp2=4.2V, and red coordinates resulted from the simulation are (0.64, 0.33) CIE1931; and when viewing from a position, an angle of 60° is formed between which and the central normal (the side-view angle), the operating voltage of the pixel electrode of the first pixel region 20a is Vp1=4.2V, the operating voltage of the pixel electrode of the second pixel region 20b is Vp2=4.2V, and red coordinates resulted from the simulation are (0.361, 0.178) CIE1931; therefore, a color shift difference between the front-view angle and the side-view angle is Δuv=0.051;
For the test product 3, that is, the product of the present disclosure, when viewing from a position, an angle of 0° is formed between which and the central normal (the front-view angle), the operating voltage of the pixel electrode of the first pixel region 20a is Vp1=4.2V, the operating voltage of the pixel electrode of the second pixel region 20b is Vp2=4.2V, and red coordinates resulted from the simulation are (0.64, 0.33) CIE1931; and when viewing from a position, an angle of 60° is formed between which and the central normal (the side-view angle), the operating voltage of the pixel electrode of the first pixel region 20a is Vp1=4.2V, the operating voltage of the pixel electrode of the second pixel region 20b is Vp2=4.2V, and red coordinates resulted from the simulation are (0.411, 0.204) CIE1931; therefore, a color shift difference between the front-view angle and the side-view angle is Δuv=0. 034;
For the test product 4, that is, the product of the present disclosure, when viewing from a position, an angle of 0° is formed between which and the central normal (the front-view angle), the operating voltage of the pixel electrode of the first pixel region 20a is Vp1=4.2V, the operating voltage of the pixel electrode of the second pixel region 20b is Vp2=4.2V, and red coordinates resulted from the simulation are (0.64, 0.33) CIE1931; and when viewing from a position, an angle of 60° is formed between which and the central normal (the side-view angle), the operating voltage of the pixel electrode of the first pixel region 20a is Vp1=4.2V, the operating voltage of the pixel electrode of the second pixel region 20b is Vp2=0V, and red coordinates resulted from the simulation are (0.490, 0.248) CIE1931; therefore, a color shift difference between the front-view angle and the side-view angle is Δuv=0.024.

According to the simulation results, the color shit differences of the test product 2, the test product 3, and the test product 4 provided by the technical solutions of the present disclosure are smaller than the color shift difference of the general product (i.e. the test product 1), and the color shift difference of the test product 4 is Δuv=0.024, which is the minimum. It can be inferred that the greater the d2/d1, the higher the color saturation of the side-view angle.

In this exemplary embodiment, the display device may include, for example, any product or component having a display function, such as a mobile phone, a tablet computer, a television, a notebook computer, a digital photo frame, a navigator, and the like.

An embodiment of the present disclosure provides an array substrate, a display device, and a driving method thereof. The first pixel regions, in which the pixel electrodes are closer to the first side of the array substrate, and the second pixel regions, in which the pixel electrodes are closer to the second side of the array substrate are disposed, such that the corresponding pixel regions can be driven for display according to the viewing angle of the user, to avoid the occurance of the cross color phenomenon when the user is viewing from the side-view angle, thereby improving the color shift phenomenon viewing from the side-view angle and increasing the display quality from the side-view angle.

It should be noted that although several modules or units of a device for carrying actions are mentioned in the detailed descriptions above, such division is not mandatory. In fact, features and functions of two or more of the modules or units described above may be embodied in one module or unit in accordance with the embodiments of the present disclosure. Conversely, the features and functions of one module or unit described above may be further embodied by multiple modules or units.

In addition, although the various steps of the method of the present disclosure are described in a particular order in the figures, it is not required or implied that the steps must be performed in the particular order, or all the illustrated steps must be performed to achieve the desired result. Additionally, or alternatively, some steps may be omitted, or multiple steps may be combined into one step to be performed, and/or one step is decomposed into multiple steps to be performed.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as exemplary only, with a true scope and spirit of the disclosure being indicated by the following claims.

## Claims

1. An array substrate comprising a plurality of pixel regions arranged in an array, wherein the pixel regions comprise a first pixel region and a second pixel region alternatively disposed in a row direction;
a pixel electrode of the first pixel region is disposed away from the center of the first pixel region in a first direction relative to the center of the first pixel region;
a pixel electrode of the second pixel region is disposed away from the center of the second pixel region in a second direction relative to the center of the second pixel region; and
the first direction and the second direction are away from each other and are both extending in the row direction.

2. The array substrate according to claim 1, further comprising data lines disposed in a column direction between the plurality of pixel regions, wherein there is a larger distance between an orthographic projection of the pixel electrode of one of the plurality of pixel regions on the array substrate and an orthographic projection of one adjacent data line on one side of the pixel electrode on the array substrate, and a smaller distance between an orthographic projection of the pixel electrode of the one of the plurality of pixel regions on the array substrate and an orthographic projection of another adjacent data line on another side of the pixel electrode on the array substrate, and a ratio between the larger distance and the smaller distance is greater than or equal to 1.5 and less than or equal to 2.5.

3. The array substrate according to claim 2, wherein a width of the pixel electrode of the first pixel region is equal to a width of the pixel electrode of the second pixel region;
for the plurality of pixel regions in a same row, a distance between the orthographic projection of the pixel electrode of the first pixel region on the array substrate and the orthographic projections of the data lines on the array substrate is equal to a distance between the orthographic projection of the pixel electrode of the second pixel region on the array substrate and the orthographic projections of the data lines on the array substrate.

4. The array substrate according to any one of claims 1 to 3, wherein the pixel regions in a same column comprise only one of the first pixel region and the second pixel region; or the pixel regions in a same column comprise the first pixel region and the second pixel region.

5. A display device comprising the array substrate according to any one of claims 1 to 4 and an opposite substrate;
a sensor configured to acquire specific features of a user;
a control circuit configured to determine a relative position between the user and the display device according to the specific features of the user, and control an operating state of the first pixel region and the second pixel region according to the relative position between the user and the display device.

6. The display device according to claim 5, wherein the display device further comprises:
a driving circuit configured to provide a data voltage to the first pixel region and the second pixel region through the data lines under the control of the control circuit.

7. The display device according to claim 5, wherein the sensor comprises an infrared sensor or an image sensor.

8. A method for driving a display device, applied to the display device according to any one of claims 5 to 7, comprising:
acquiring specific features of a user;
determining a relative position between the user and the display device according to the specific features of the user, and controlling an operating state of the first pixel region and the second pixel region according to the relative position between the user and the display device.

9. The method according to claim 8, further comprising:
providing a data voltage corresponding to the operating state of the first pixel region and the second pixel region to the first pixel region and the second pixel region through the data lines.

10. The method according to claim 9, wherein the providing a data voltage corresponding to the operating state of the first pixel region and the second pixel region to the first pixel region and the second pixel region through the data lines comprises:
providing a data voltage to the first pixel region or the second pixel region through the data lines, when an included angle between a relative position between the user and the display device and an emission light perpendicular to the display device is greater than a preset angle; and
providing a data voltage to the first pixel region and the second pixel region through the data lines, when an included angle between a relative position between the user and the display device and an emission light perpendicular to the display device is less than or equal to the preset angle.
